# EUROPEAN PATENT SPECIFICATION

(11) **EP 2 856 889 B1**
(45) Date of publication and mention of the grant of the patent: **08.06.2016**
(21) Application number: 14177610.4
(22) Date of filing: 18.07.2014
(51) Int. Cl.: A24C 5/35

(54) **Multi-segment cleaning device**
Mehrsegmentale Reinigungsvorrichtung
Dispositif de nettoyage à segments multiples

(30) Priority: 13.08.2013 PL 40505713
(43) Date of publication of application: 08.04.2015
(73) Proprietor: International Tobacco Machinery Poland Sp. z o.o., 26-600 Radom (PL)
(72) Inventor: Gielniewski, Adam, 26-600 Radom (PL)
(74) Representative: Markieta, Jaroslaw Franciszek

(56) References cited:
- DE-C1- 10 106 614
- US-A- 2 810 143
- US-A- 2 951 255
- US-A- 3 011 197
- US-A- 3 074 436

## Description

The object of the invention is a multi-segment cleaning device used in the tobacco industry.

A problem in the operation of installations in the tobacco industry is efficient and effective splitting of product brands. The transport channels for the mass flow of such products as cigarettes, filter rods, cigars or cigarillos are often very complex and in addition run in different directions, also vertically, above the operational stands and transport lines for operators operating these stands. The access to the beginning and the end of each section of transport channels, which require cleaning to remove the products when changing the product brand, is often difficult and takes time in each case. The access to connection zones of transporters forming a channel, which are susceptible to deposition of products, is also difficult.

That is why systematic cleaning of installations used in the tobacco industry is a routine practice. Moreover, cleaning is required each time before a change of the product brand - this activity was introduced for technological reasons, i.e. the removal of all products coming from preceding production.

A standard solution known in the state of the art is the stoppage of the production line, manual or automatic leading-in into the installation channel of a multi-segment cleaning member, e.g. a sponge filling the channel in its cross-section, and start-up of the installation with simultaneous observation of the movement of the cleaning member along the installation, then another stoppage of the installation and removal of the cleaning member at the other end of installation being cleaned or at the receiving station.

A drawback of the known solution emerges during the cleaning of vertical or complex-shaped channels. Multi-segment cleaning devices either jam when squeezing through sharp bends of the transport channel or slide down in vertical channels in a situation where the transport channel widens and the cleaning device loses the support in one of the walls.

Multi-segment cleaning devices used in transport channels of transport lines conveying rod-shaped articles are known in the state of the art.

A multi-segment cleaning device whose members are made of an elastic material is known from the international patent application WO 2011/136670. This device is led in into and out of the channel by means of an automatic docking station.

The European patent application EP 1 712141 A2 presented a cleaning device made of joined cells which is transferred in the transport channels. The design of the device allows transferring it at the angle of 90° whereas the cleaning and guiding members are made of dimensionally stable elastic plastic foam.

The US patent No. US 5 316122 presented a slide to be guided in transport channels. The slide is guided by means of conveyors; in a top view the slide has the form of oblong rectangle. According to the patent, the slide is made of cells joined by spherical joints so that it can deflect in the plane of the transport channel as well as in the direction perpendicular to that plane.

The US patent No. 2 810 143 discloses the preamble of claim 1 more particularly cleaner for pipelines. It relates to scrapers for removing paraffin wax and other solids and semi-solid material from the pipe lines. Cleaner assembly comprises at least one spherical, flexible ball having a diameter approximately equal to the inner diameter of the pipe line, pulling ring and a scraper element attached to said ball on side opposite to the pulling ring. The scraper is adopted to follow said ball in said pipe line.

The object of the invention is a multi-segment cleaning device used in the tobacco industry to clean channels transporting rod-shaped articles, comprising at least two cleaning members. A device according to the invention is as stated in claim 1.

Furthermore, a device according to the invention is characterised in that at least one of the cleaning members is a member with increased deadweight relative to a second cleaning member.

Furthermore, a device according to the invention is characterised in that a cleaning member comprises a core enclosed by a material ensuring the deformation of a cleaning member.

Furthermore, a device according to the invention is characterised in that a cleaning member comprises an external casing enclosing the filling material, ensuring the deformation of a cleaning member.

Furthermore, a device according to the invention is characterised in that a cleaning member has a weight greater by at least 50% than the weight of a second cleaning member, preferably a weight greater by 100% than the weight of a second cleaning member.

Furthermore, a device according to the invention is characterised in that a cleaning member deforms so that when adhering to the wall of the transport channel the contact surface of a cleaning member is greater by at least 30% than the contact surface of a second cleaning member, at the same point of the transport channel. Preferably, the contact surface is greater by 100% than the contact surface of a second cleaning member.

Furthermore, a device according to the invention is characterised in that the core of a cleaning member is made of a material selected from a group comprising in particular metals, plastics, wood.

Furthermore, a device according to the invention is characterised in that a cleaning member is filled with an amorphous material selected from a group comprising in particular granules, powders, gels, liquids.

Furthermore, a device according to the invention is characterised in that cleaning members are alternately connected, along the direction of transport, one after another, by means of a connecting member so that they can deflect in at least one direction relative to one another.

Furthermore, a device according to the invention is characterised in that cleaning members are separated by a distance piece.

Furthermore, a device according to the invention is characterised in that extreme cleaning members are, in addition, provided with detection markers.

Furthermore, a device according to the invention is characterised in that in addition it is provided with an elastic member that cooperates with a connecting member so that it reduces the stresses of the connecting member.

Due to increased elasticity of the cleaning members, a device according to the invention adheres with a greater surface to the walls of the transport channel so that it does not slide down in vertical channels, and it is also possible to lead it through channels with a complex shape. In addition, the effect of adherence to the walls increases due to the lead-in of members with increased weight; this allows free guiding of the cleaning device in channels with a complex shape where the increased weight ensures stable guiding of the device.

The object of invention has been shown in detail in a preferred embodiment in a drawing in which:
- Fig. 1: diagrammatically shows a cleaning device according to the invention;
- Fig. 2: shows a section of a cleaning device according to the invention;
- Fig. 3: shows a section of another embodiment of a cleaning device according to the invention;
- Fig. 4: shows a cleaning device according to the invention in a vertical transport channel;
- Fig. 5: shows, in enlargement, two members of a cleaning device in a vertical transport channel;
- Fig. 6: shows a cleaning device moving along a path in a multilayer system of transport channels;
- Fig. 7: shows a cleaning device moving inside a channel in a multilayer system of transport channels;

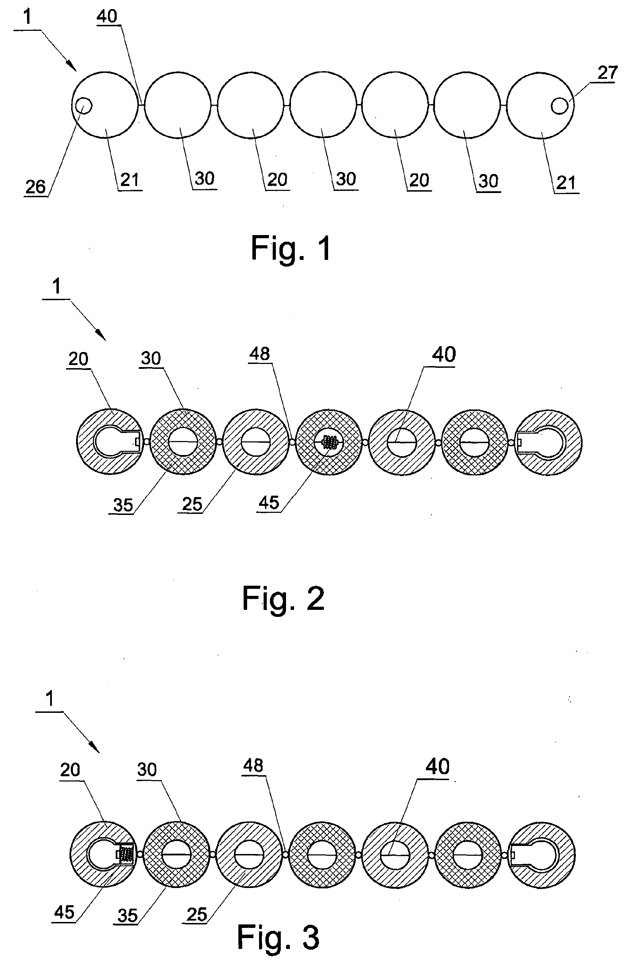

Fig. 1 shows a preferred embodiment of a cleaning device 1 according to the invention in a side view. A cleaning device is provided with extreme cleaning members 21 on which detection markers 26, 27 have been placed; in addition, it is provided with internal first and second cleaning members 20 and 30 having different physical properties so that they can ensure different surfaces of adherence of the cleaning members 20 and 30 to the walls of the transport channel. In a preferred embodiment of the invention the second members 20 are characterised in that they adhere to the walls of the transport channel over a smaller surface. These are usually members made of sponge with a core made of plastic. The first members 30 are more plastic, they may be made of various plastics or natural plastics, preferably they have the form of a jacket in a material casing enclosing the core of plastic. The term "plastic" is to be understood as the possibility of temporary surface deformation imaging the shape of the surface of the transport channel. In other words, the surface of the member 30 substantially takes the shape of the channel surface, for example of small projections and any surface breaks.

Fig. 2 shows a section of an embodiment of a cleaning device according to the invention. A cleaning device 1 is made of seven alternately disposed cleaning members 20, 30. All cleaning members 20, 30 are mounted on a connector 40 which is anchored in the extreme cleaning members. The connector 40 comprises a compensating member 45 disposed in the central part, as shown in Fig.2. However, a different location of a compensating member 45, for example at the ends of the connector 40 as shown in Fig. 3, is possible. The compensating member may be a spring or an insert of a material with a greater elasticity, e.g. rubber with increased strength which is more elastic than a steel cable or a chain made of polyethylene. The function of a compensating member is to adjust the distance between the members of a cleaning device when squeezing through complicated transport channels, for example at the curves of the transport channels.

A connector 40 preferably has the form of a steel cable. Furthermore, between cleaning members 20, 30 at the connector 40, separators 48 maintaining the distance between the cleaning members 20, 30 are disposed.

Figs. 2 and 3 diagrammatically show a different filling 25, 35, respectively, of the cleaning members 20 and 30. According to the invention, the second cleaning members 20 are less plastic than the first cleaning members 30. The cleaning members 30 may be made of various plastics or natural plastics; preferably they have the form of a jacket in a material casing enclosing a core of plastic, wood or metal. A material casing may be made of such material as polyester, or have the form of a rubber or rubberised coating, preferably the casing is made of a fabric. Generally, it should be made of a material allowing lining of the irregularities of the surface of the transport channels.

A jacket of a cleaning member is preferably filled with an amorphous material 35, e.g. polycarbonate granules, natural granules; it may have the form of a silicone filling or a gel. Such filling gives the cleaning member the desired physical properties, i.e. allows adjusting the shape of the cleaning member to the surfaces of the walls 51, 52 of the transport channel 50 and the transport belt. Furthermore, the possibility of using various fillings allows adjusting the weight of the first cleaning members 30. Alternatively, the first cleaning members 30 may be made of an elastic coating identical to the coating applied in the second cleaning members 20, but with the difference that they have a heavier core. This allows obtaining a greater contact surface with the walls of the transport channel. Preferably, the weight of the first cleaning member 30 is at least 50% greater than the weight of the second cleaning member 20, preferably 100% greater. A greater weight allows overcoming the stiffness of the outer coating protecting a jacket 35 of the first cleaning member 30 and increasing the contact surface of the first cleaning member 30 with the wall of the transport channel.

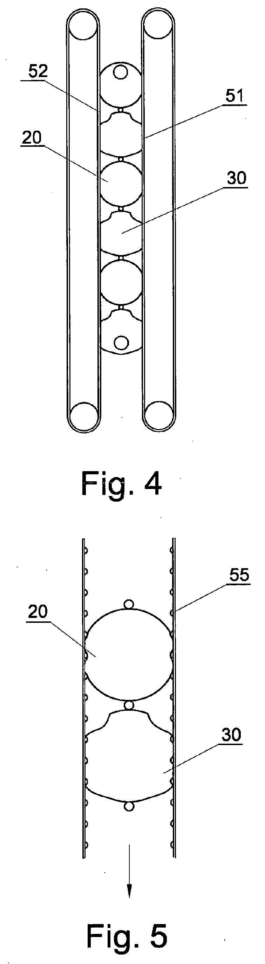

Fig. 4 shows the cleaning device in a vertical transport channel. In Fig. 4, the difference in the behaviour of first and second cleaning members 20 and 30 can be seen. The first members 30 contact the walls of the transport channel over a greater surface. During the tests, it was unexpectedly noticed that the preferred effect of holding the cleaning device in a vertical transport channel was obtained when the contact surface of the members 30 was at least 30% greater that the contact surface of the second cleaning members 20, preferably 100% greater than the contact surface of the second cleaning member 20.

Furthermore, as shown in Fig. 5, it should be noted that the walls of the transport channel are provided with small projections 55 which increase the effect of holding so that the device does not spontaneously slide down under the action of the force of gravity. Furthermore, the walls of the transport channel may be made of stainless steel or polyethylene.

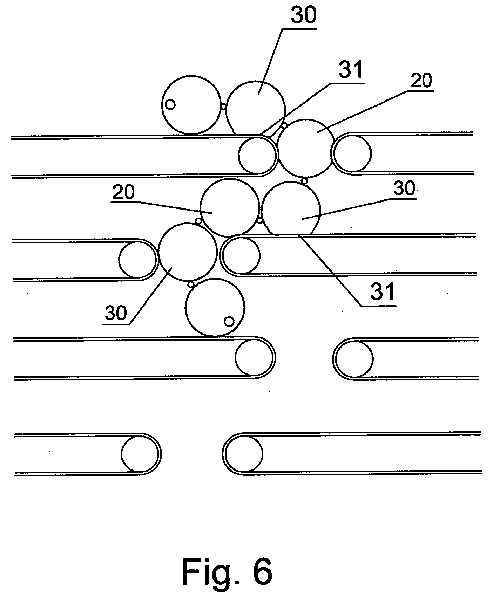

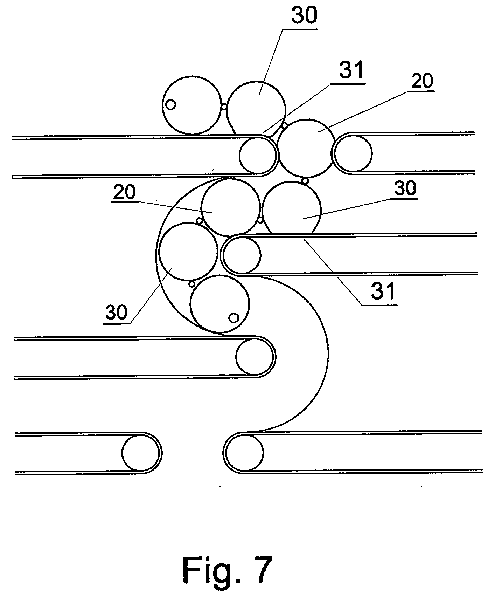

Fig. 6 shows another type of the vertical transport channel in which the cleaning device is moved among the particular levels of a complex multi-layered transport system. During the research works, it was unexpectedly found that the preferable effect of holding the cleaning device may be increased by differentiating the weight of particular cleaning members. An increased weight in connection with a greater plasticity of the jacket of the first members 30 causes that they adhere over a greater surface to the walls of the transport channel. The contact surface 31 of a cleaning member together with an increased weight of the first members 30 allows holding the cleaning device which does not fall down and does not slide down the complex path of the transport channel. Fig. 7 shows another type of the channel in which the cleaning device may be used. The cleaning device squeezes through the shown arched channels in such a way that the guiding part of the device is held on one horizontal transporter, and the back part of the device is held on another horizontal transporter situated above.

## Claims

1. A multi-segment cleaning device for tobacco industry to clean rectangular in cross-section channels transporting rod-shaped articles, comprising at least two cleaning members (20, 30) having different physical properties whereby
at least one of the cleaning members (30) is made of a material ensuring a greater deformation of a first cleaning member (30) and adhering to a wall (51, 52) of the transport channel (50) with a given area, while
the second cleaning member (20) is made of a material ensuring the deformation of a second cleaning member (20) and the area of adhering to the wall (51, 52) of the transport channel (50) at the same point is smaller than the first one, **characterised in that**
the extreme members of the cleaning device are the second cleaning members (20).

2. A device as in claim 1 **characterised in that** at least one of the cleaning members (30) is a first member having increased weight relative to the second cleaning member (20).

3. A device as in claim 2 **characterised in that** the first cleaning member (30) comprises a core enclosed with a material ensuring the deformation of the first cleaning member (30).

4. A device as in any of the claims 1 to 3 **characterised in that** the first cleaning member comprises an outer shield enclosing the filling material ensuring the deformation of the first cleaning member (30).

5. A device as in any of the claims 1 to 4 **characterised in that** the first cleaning member (30) has a weight greater at least by 50% than the weight of the second cleaning member (20), preferably a weight greater by 100% than the weight of the second cleaning member (20).

6. A device as in any of the claims 1 to 5 **characterised in that** the first cleaning member (30) deforms so that when adhering to the wall (51, 52) of the transport channel (50) the contact surface (31) of the first cleaning member (30) is at least by 30% greater than the contact surface of the second cleaning member (20) at the same point of the transport channel, preferably the contact surface (31) is by 100% greater than the contact surface of the second cleaning member (20).

7. A device as in any of the claims 3 to 6 **characterised in that** the core of the first cleaning member (30) is made of a material selected from a group comprising in particular metals, plastics, wood.

8. A device as in any of the claims 4 to 7 **characterised in that** a cleaning member (30) is filled with an amorphous material selected from a group comprising in particular granules, powders, gels, liquids.

9. A device as in any of the preceding claims 1 to 8 **characterised in that** the first and second cleaning members (20, 30) are alternately connected, along the direction of transport, one after another, by means of a connecting member (40) so that they can deflect in at least one direction relative to one other.

10. A device as in any of the preceding claims 1 to 9 **characterised in that** first and second cleaning members (20, 30) are separated by a distance piece (48).

11. A device as in any of the preceding claims 1 to 10 **characterised in that** extreme second cleaning members (20) are in addition provided with detection markers (26).

12. A device as in any of the preceding claims 1 to 11 **characterised by** being provided in addition with an elastic member (45) which cooperates with a connecting member (40) so that it reduces the stresses of a connecting member (40).

## Patentansprüche

1. Mehrsegmentale Reinigungsvorrichtung für die tabakverarbeitende Industrie zur Reinigung von im Querschnitt rechteckigen Kanal-Förderstrecken für stabförmige Artikel, bestehend aus mindestens zwei Reinigungselementen (20, 30) mit unterschiedlichen physikalischen Eigenschaften, **wobei**
mindestens eines der Reinigungselemente (30) aus einem Material besteht, das eine größere Verformung eines ersten Reinigungselemente (30) und das Haften an einer bestimmten Fläche einer Wand (51, 52) des Förderkanals (50) sicherstellt, während
das zweite Reinigungselement (20) aus einem Material besteht, das die Verformung eines zweiten Reinigungselements (20) sowie eine kleinere Haftfläche an der gleichen Stelle der Wand (51, 52) des Förderkanals (50) als im Fall des ersten sicherstellt, **dadurch gekennzeichnet, dass**
die äußersten Elemente der Reinigungsvorrichtung die zweiten Reinigungselemente (20) sind.

2. Vorrichtung nach Anspruch 1, **dadurch gekennzeichnet, dass** mindestens eines der Reinigungselemente (30) ein höheres Gewicht im Verhältnis zum zweiten Reinigungselement (20) aufweist.

3. Vorrichtung nach Anspruch 2, **dadurch gekennzeichnet, dass** das erste Reinigungselement (30) einen Kern mit einer Umhüllung aus einem Material aufweist, das die Verformung des ersten Reinigungselements (30) sicherstellt.

4. Vorrichtung nach einem der Ansprüche 1 bis 3, **dadurch gekennzeichnet, dass** das erste Reinigungselement eine äußere Abschirmung aufweist, die das Füllmaterial umfasst, das die Verformung des ersten Reinigungselements (30) sicherstellt.

5. Vorrichtung nach einem der Ansprüche 1 bis 4, **dadurch gekennzeichnet, dass** das erste Reinigungselement (30) ein um mindestens 50% größeres Gewicht als das Gewicht des zweiten Reinigungselements (20) aufweist, vorzugsweise ein um 100% größeres Gewicht als das Gewicht des zweiten Reinigungselements (20).

6. Vorrichtung nach einem der Ansprüche 1 bis 5, **dadurch gekennzeichnet, dass** sich das erste Reinigungselement (30), wenn es an der Wand (51, 52) des Förderkanals (50) haftet, in der Weise verformt, dass die Kontaktfläche (31) des ersten Reinigungselements (30) zumindest um 30% größer als die Kontaktfläche des zweiten Reinigungselements (20) an der gleichen Stelle des Förderkanals ist, vorzugsweise ist die Kontaktfläche (31) um 100% größer als die Kontaktfläche des zweiten Reinigungselements (20).

7. Vorrichtung nach einem der Ansprüche 3 bis 6, **dadurch gekennzeichnet, dass** das erste Reinigungselement (30) einen Kern aus einem Material ausgewählt aus einer insbesondere aus Metallen, Kunststoffen und Holz gebildeten Gruppe aufweist.

8. Vorrichtung nach einem der Ansprüche 4 bis 7, **dadurch gekennzeichnet, dass** das erste Reinigungselement (30) mit einem amorphen Material ausgewählt aus einer insbesondere aus Granulaten, Pulvern, Gelen und Flüssigkeiten gebildeten Gruppe gefüllt ist.

9. Vorrichtung nach einem der vorangehenden Ansprüche 1 bis 8, **dadurch gekennzeichnet, dass** die ersten und zweiten Reinigungselemente (20, 30) mittels eines Verbindungselements (40) abwechselnd nacheinander entlang der Transportrichtung verbunden sind, so dass sie mindestens in einer Richtung relativ zueinander auslenken können.

10. Vorrichtung nach einem der vorangehenden Ansprüche 1 bis 9, **dadurch gekennzeichnet, dass** die ersten und zweiten Reinigungselemente (20, 30) durch ein Distanzstück (48) getrennt sind.

11. Vorrichtung nach einem der vorangehenden Ansprüche 1 bis 10, **dadurch gekennzeichnet, dass** die äußeren zweiten Reinigungselemente (20) zusätzlich mit Erkennungsmarkern (26) versehen sind.

12. Vorrichtung nach einem der vorangehenden Ansprüche 1 bis 11, **dadurch gekennzeichnet, dass** sie zusätzlich mit einem elastischen Element (45) versehen ist, das mit einem Verbindungselement (40) zusammenwirkt, so dass es die Belastungen eines Verbindungselements (40) reduziert.

## Revendications

1. Dispositif de nettoyage à plusieurs segments utilisés dans l'industrie du tabac pour nettoyer les canaux à section transversale rectangulaire qui transportent des articles en forme de tige, comprenant au moins deux éléments de nettoyage (20, 30) ayant des propriétés physiques différentes où
au moins un des éléments de nettoyage (30) est conçu d'un matériau assurant une plus grande déformation d'un premier élément de nettoyage (30) et en contact avec une paroi (51, 52) du canal de transport (50) ayant une surface donnée, tandis que
le deuxième élément de nettoyage (20) est conçu d'un matériau assurant la déformation d'un second élément de nettoyage (20) et la surface de contact avec les parois (51, 52) du canal de transport (50) au même point est inférieure à la celle du premier, **caractérisé en ce que**
les éléments à l'extrémité du dispositif de nettoyage sont le deuxième élément de nettoyage (20).

2. Dispositif selon la revendication 1, **caractérisé en ce qu'**au moins un des éléments de nettoyage (30) est un premier élément ayant un poids accru par rapport au second élément de nettoyage (20).

3. Dispositif selon la revendication 2, **caractérisé en ce que** le premier élément de nettoyage (30) comprend un noyau revêtu d'un matériau assurant la déformation du premier élément de nettoyage (30).

4. Dispositif selon l'une des revendications de 1 à 3, **caractérisé en ce que** le premier élément de nettoyage comprend un blindage extérieur entourant le matériau de remplissage assurant la déformation du premier élément de nettoyage (30).

5. Dispositif selon l'une des revendications de 1 à 4, **caractérisé en ce que** le premier élément de nettoyage (30) présente un poids supérieur d'au moins 50% à la masse du second élément de nettoyage (20), de préférence un poids supérieur de 100% à la masse du second élément de nettoyage (20)

6. Dispositif selon l'une des revendications de 1 à 5, **caractérisé en ce que** le premier élément de nettoyage (30) se déforme de telle sorte que lors de son contact avec les parois (51, 52) du canal de transport (50), la surface de contact (31) du premier élément de nettoyage (30) est au moins de 30% supérieure à la surface de contact du second élément de nettoyage (20) au même point du canal de transport, de préférence la surface de contact (31) est de 100% supérieure à la surface de contact du second élément de nettoyage (20).

7. Dispositif selon l'une des revendications de 3 à 6, **caractérisé en ce que** le noyau du premier élément de nettoyage (30) est conçu d'un matériau sélectionné dans un groupe comprenant notamment des métaux, des matières plastiques, du bois.

8. Dispositif selon l'une des revendications de 4 à 7, **caractérisé en ce qu'**un élément de nettoyage (30) est rempli d'un matériau amorphe sélectionné dans un groupe comprenant notamment des granulés, des poudres, des gels et des liquides.

9. Dispositif selon l'une des revendications précédentes de 1 à 8, **caractérisé en ce que** le premier et le deuxième élément de nettoyage (20, 30) sont reliés alternativement, dans la direction du transport, l'un après l'autre, grâce à un élément de liaison (40), de sorte qu'ils puissent ainsi s'orienter dans au moins une direction par rapport à une autre.

10. Dispositif selon l'une des revendications précédentes de 1 à 9, **caractérisé en ce que** le premier et le deuxième élément de nettoyage (20,30) sont séparés par une pièce intercalaire (48).

11. Dispositif selon l'une des revendications précédentes de 1 à 10, **caractérisé en ce que** les seconds éléments de nettoyage à l'extrémité (20) sont également pourvus de marqueurs de détection (26).

12. Dispositif selon l'une des revendications précédentes de 1 à 11, **caractérisé par** le fait d'être également pourvu d'un élément élastique (45) qui coopère avec un élément de liaison (40) afin de réduire les contraintes d'un élément de liaison (40).
